# EUROPÄISCHE PATENTSCHRIFT

(11) **EP 3 485 718 B1**
(45) Veröffentlichungstag und Bekanntmachung des Hinweises auf die Patenterteilung: **23.09.2020**
(21) Anmeldenummer: 18000855.9
(22) Anmeldetag: 01.11.2018
(51) Int. Cl.: A01D 57/30, A01D 34/66

(54) **MÄHMASCHINE**
MOWING MACHINE
FAUCHEUSE

(30) Priorität: 09.11.2017 DE 102017010367
(43) Veröffentlichungstag der Anmeldung: 22.05.2019
(73) Patentinhaber: Maschinenfabrik Bernard Krone GmbH & Co. KG, 48480 Spelle (DE)
(72) Erfinder: Lömker, Jens, 48496 Hopsten (DE); Petersmann, Maike, 49492 Westerkappeln (DE)

(56) Entgegenhaltungen:
- EP-A1- 0 061 818
- WO-A1-2017/009522
- DE-C1- 19 931 684
- DE-U1-202012 012 883

## Beschreibung

Die Erfindung betrifft eine Mähmaschine zum Mähen von halmförmlgem Erntegut und zum Bilden eines seitlich von der Mähmaschine abzulegenden Schwades nach dem Oberbegriff des Patentanspruches 1. Derartige Mähmaschinen sind aus dem Stand der Technik in zahlreichen Ausführungsformen bekannt und umfassen zur Bildung eines seitlich von der Mäheinrichtung abzulegenden Schwades einen Querförderer, der das abgemähte, halmförmige Erntegut von der Mäheinrichtung übernimmt und es quer zur Fahrt- und Arbeitsrichtung zu einer Schwadablagestelle seitlich von der Mäheinrichtung befördert. Ebenfalls durch die Einwirkung des Querförderers soll dort dann ein exakt geformtes Erntegutschwad abgelegt werden.

Grundsätzlich wird nach dem Stand der Technik bei den betreffenden Mähmaschinen zwischen zwei verschiedenen Ausführungsvarianten unterschieden. Bei einer ersten Variante wird das abgemähte Halmgut nicht direkt an den Querförderer übergeben sondern eine Aufbereitungseinrichtung oder dgl. Förderer unterstützt die Übergabe des Halmgutes von der Mäheinrichtung an den Querförderer. Bei einer zweiten Variante dagegen wird das abgemähte Halmgut unmittelbar von der Mäheinrichtung an den Querförderer übergeben. Daraus ergeben sich für den Übergabeprozess spezielle Erfordernisse, ohne die eine störungsfreie Übergabe nicht erreichbar ist. So darf der Förderweg beispielsweise keine die Förderung behindernde Stufen enthalten. Daraus ergibt sich, dass zur Querförderung nur Querförderschnecken in Betracht kommen, deren Drehrichtung so gerichtet ist, dass sich die Schneckenwindungen an der der Mäheinrichtung zugewandten Seite nach unten zum Boden hin bewegen.

Aus der DE 20 2012 012 883 U1 Ist eine Mähmaschine bekannt geworden, bei der der Mäheinrichtung eine Querförderschnecke nachgeordnet ist und das abgemähte Halmgut unmittelbar und ohne eine Zwischenförderung von der Mäheinrichtung an die Querförderschnecke übergeben wird. Ein die Querförderschnecke umgebender und ortsfester Mantel ist dazu so hinter der Mäheinrichtung angeordnet, dass eine untere Einlaufkante des Mantels sich direkt an einen Mähbalken der Mäheinrichtung anschließt und somit eine Einlauföffnung für die Querförderschnecke begrenzt. Zur Steuerung der Querförderung der Querförderschnecke weist der Mantel eine oder mehrere Abstreiferleisten auf, die in dem der Mäheinrichtung abgewandten Bereich des Mantels angebracht sind. Derartige Mähmaschinen mit einer nachgeordneten Querförderschnecke sind mit dem Mangel behaftet, dass wechselnde Durchsatzmengen entweder zu Stauungen oder zu erhöhten Bedarfen an Antriebsenergie führen. Weiterhin wird durch die Engpässe an den Abstreiferleisten eine exakte Ausformung der abzulegenden Schwade erschwert. Die Dokumente EP 0 061 818 A1 und WO 2017/009522 A1 beschreiben bekannte Mähmaschinen, wobei das Dokument EP 0 061 818 A1 die Merkmale des Oberbegriffs des Gegenstands des Anspruchs 1 zeigt.

Der Erfindung liegt daher die Aufgabe zugrunde, die Mängel aus dem Stand der Technik zu vermeiden und eine Querfördereinrichtung bereitzustellen, die sich selbst bei wechselnden Erntegutdurchsätzen durch einen gleichmäßigen Querförderprozess und durch eine optimale Schwadablage auszeichnet.

Erfindungsgemäß wird diese Aufgabe durch die Merkmale des kennzeichnenden Teils des Anspruchs 1 gelöst. Vorteilhafte Weiterbildungen der Erfindung gehen aus den weiteren Ansprüchen hervor.
Nach der Erfindung wird dazu eine Mähmaschine mit einer Anzahl an einer Mäheinrichtung angebrachten, um eine etwa vertikale Achse rotierend angetriebenen Schneidorganen vorgeschlagen, welche an ihrem Umfang zumindest zwei drehbeweglich angeordnete, infolge der Fliehkraft radial nach außen stehende und eine Schneidwirkung erzeugende Schneidwerkzeuge aufweisen, mit einem der Mäheinrichtung nachgeordneten Querförderer, der eine, um eine liegende und zumindest in etwa quer zur Fahrt- und Arbeitsrichtung ausgerichtete Querförderschnecke umfasst, welche unmittelbar hinter der Mäheinrichtung angeordnet ist und das gemähte Erntegut direkt von der Mäheinrichtung übernimmt, mit einer die Querförderschnecke zumindest teilweise umgebenden Haube, die eine in Fahrt- und Arbeitsrichtung weisende Einlauföffnung besitzt und dessen Innenmantelfläche mit der Außenkontur der Querförderschnecke einen Förderspalt begrenzt, wobei die Weite des Förderspaltes zwischen der Innenmantelfläche der Haube und der Außenkontur der Querförderschnecke durch eine Verstellvorrichtung veränderbar ausgestaltet ist.

Durch die veränderliche Ausgestaltung der Weite des Förderspaltes zwischen den Schneckenwindungen (Außenkontur) der Querförderschnecke und einer Innenmantelfläche der die Querförderschnecke umgebenden Haube wird eine Mähmaschine zum Mähen von halmförmigen Erntegut und zum Bilden eines seitlich von der Mähmaschine abzulegenden Schwades bereitgestellt, bei der insbesondere bei dem Querförderprozess des Halmgutes aufgrund von wechselnden Erntegutdurchsätzen weder Engpässe im Förderspalt zu Stauungen im Förderprozess noch zu erhöhten Leistungsbedarfen führen. Durch eine Veränderung der Weite des Förderspaltes wird es ermöglicht, auf jede Veränderung der Erntedurchsatzmenge in der Welse zu reagieren, dass ein störungsfreier Querförderprozess sowie eine Schwadablage erreichbar ist, bei der unerwünschte Erntegutverdichtungen im abzulegenden Erntegutschwad vermieden werden. Dabei kann es vorgesehen sein, dass die Veränderung der Weite des Förderspaltes auf manuelle Art und Weise herbeigeführt wird. Vorteilhafterweise kann die Mähmaschine aber auch so gestaltet sein, dass die Veränderung der Weite des Förderspaltes in Abhängigkeit von der Durchsatzmenge des abgemähten Halmgutes geregelt erfolgt. Nach einer Feststellung der aktuellen Durchsatzmenge kann eine Steuereinrichtung dazu eingerichtet sein, die Weite des Förderspaltes durch eine hydraulische, pneumatische oder elektrisch ansteuerbare Verstellvorrichtung zu verändern. Gemäß der Erfindung ist die die Querförderschnecke umgebende Haube mit einer Innenmantelfläche versehen, die relativ zur Haube verstellbar ausgeführt ist. Das bedeutet, dass die Innenmantelfläche in einem oberen Bereich der Haube schwenkbar gehaltert ist und In einem unteren Bereich der Haube durch die Verstellvorrichtung näher an die Schneckenwindungen der Querförderschnecke herangeführt oder weiter davon entfernt werden kann.
In einer vorteilhaften Weiterbildung der Erfindung ist es vorgesehen, dass die Haube weiterhin auch schwenkbar am Tragrahmen der Mäheinrichtung gehaltert sein kann, so dass die Haube mit seiner der Querförderschnecke zugewandten Innenmantelfläche aus einer der Querförderschnecke benachbarten Stellung in eine weiter von der Querförderschnecke entfernten Stellung verbracht werden kann. In der der Querförderschnecke benachbarten Stellung der Haube Ist dabei eine Querförderung des abgemähten, halmförmigen Erntegutes und eine anschließende Ablage in einem Schwad seitlich von der Mäheinrichtung vorgesehen. In der von der Querförderschnecke weiter entfernten Stellung der Haube ist dagegen eine Breitablage des abgemähten, halmförmigen Erntegutes erreichbar. Zur Verstellung der Haube gegenüber dem Tragrahmen der Mäheinrichtung können allgemein bekannte Stellglieder, wie Hydraulikzylinder oder dgl. vorgesehen sein.

Eine weitere vorteilhafte Ausgestaltung der erfindungsgemäßen Mähmaschine ist in der Ausbildung der Lagerung der Querförderschnecke an der Abgabeseite der Querförderschnecke zu sehen. Um einen möglichst großen Bereich zur Schwadablage an der Abgabeseite der Querförderschnecke zur Verfügung stellen zu können, ist es vorgesehen, eine Halterung zur ortsfesten und drehbaren Lagerung der Querförderschnecke so zu gestalten, dass diese sich von der Lagerstelle an der Querförderschnecke ausgehend in eine Richtung erstreckt, die zumindest in etwa in die 11-Uhr-Stellung zeigt. Dadurch ergibt sich in dem der Mäheinrichtung abgewandten Bereich der Querförderschnecke ein hinreichend großer Bereich für eine störungsfreie Schwadablage seitlich von der Mäheinrichtung.

Eine weitere, vorteilhafte Weiterbildung der Mähmaschine stellt auf die Anbringung und Ausgestaltung der Abstreiferleiste an der die Querförderschnecke umgebenden Haube ab. Hierbei ist es von besonderer Bedeutung, dass die Anbringung der Abstreiferleiste an der Innenseite der Haube in einem Bereich erfolgt, der in Bezug auf eine Blickrichtung auf die Seitenansicht der Querförderschnecke an der Abgabeseite zwischen einer 12-Uhr-Stellung und einer 15-Uhr-Stellung liegt. Damit wird die Schwadablage in einem Bereich vollzogen, der aufgrund seines größeren Abstandes zum Erdboden eine optimale Schwadablage begünstigt. Ferner Ist es auch vorteilhaft, wenn das Ende der Abstreiferleiste an der Abgabeseite der Querförderschnecke in Bezug auf die Längsausrichtung der Querförderschnecke über das Ende der Schneckenwindung hinausgeht.

Um erfolgreich das Aufwickeln von langstängeligem Halmgut am Ende der Querförderschnecke zu vermeiden, umfasst die Querförderschnecke am abgabeseitigen Ende der Schneckenwindungen einen Räumer, der mit einem ortsfesten weiteren Abstreifer zusammenwirkt. Ein an der Halterung zur Lagerung der Querförderschnecke an der Abgabeseite angebrachter Abstreifer ist so gestaltet, dass bei jeder Umdrehung der Querförderschnecke etwaiges zum Umwickeln neigendes Halmgut in einem Scherenschnitt zerkleinert wird und somit eine Umwickelungsgefahr der Querförderschnecke minimiert ist.

Eine vorteilhafte Auswirkung auf eine störungsfreie Schwadablage ergibt sich auch aus einer Anordnung bzw. einer Gestaltung der Halterung der Mäheinrichtung am Tragrahmen. In diesem Zusammenhang Ist es vorgesehen, die Halterung für die Mäheinrichtung am Tragrahmen außerhalb des Mäh- und Förderbereiches des der Abgabeseite der Querförderschnecke zugewandten, inneren Schneidorganes anzuordnen. Weiterhin ist es vorteilhaft, die Halterung für die Mäheinrichtung am Tragrahmen dem Abgabebereich der Querförderschnecke vorzuordnen. Das bedeutet, dass die Halterung für die Mäheinrichtung am Tragrahmen sich in einem Bereich vor der Querförderschnecke, jedoch eingerückt gegenüber dem Ende der Querförderschnecke vom Ende der Mäheinrichtung in nahezu vertikaler Ausrichtung zum Tragrahmen erstreckt.

Nachfolgend wird ein vorteilhaftes Ausführungsbeispiel der Erfindung anhand einer Zeichnung beschrieben. In der Zeichnung zeigt:
- Fig.: 1: eine Seitenansicht auf eine erfindungsgemäße Mähmaschine in einer ersten Arbeits- und Betriebsstellung;
- Fig. 2:: eine Seitenansicht der Mähmaschine nach Fig. 1, jedoch in einer weiteren Arbeitsund Betriebsstellung;
- Fig. 3:: eine vergrößerte Darstellung der Einzelheit A in Fig. 1;
- Fig. 4:: eine perspektivische Ansicht der Mähmaschine nach Fig. 1 mit einer Blickrichtung aus einer Position seitlich vor der Mähmaschine;
- Fig. 5:: eine perspektivische Ansicht der Mähmaschine nach Fig. 1 mit einer Blickrichtung aus einer Position seitlich hinter der Mähmaschine;

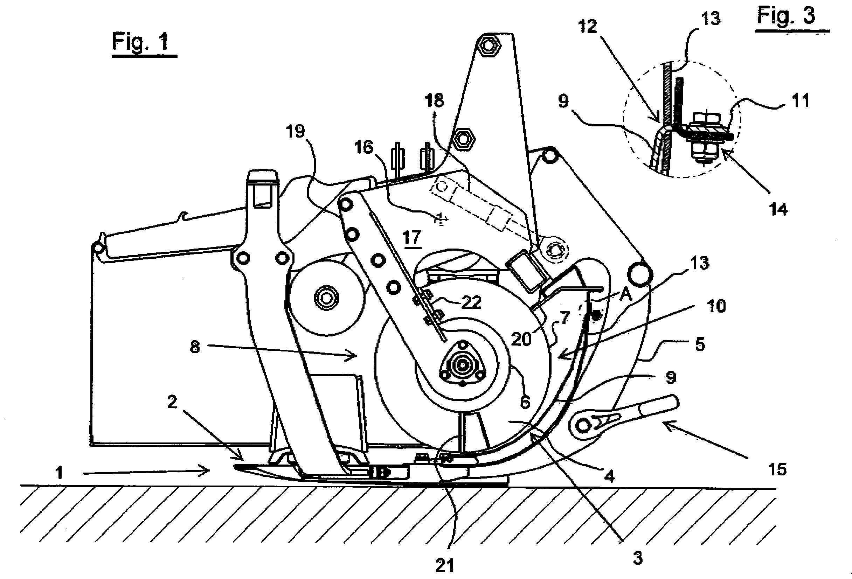

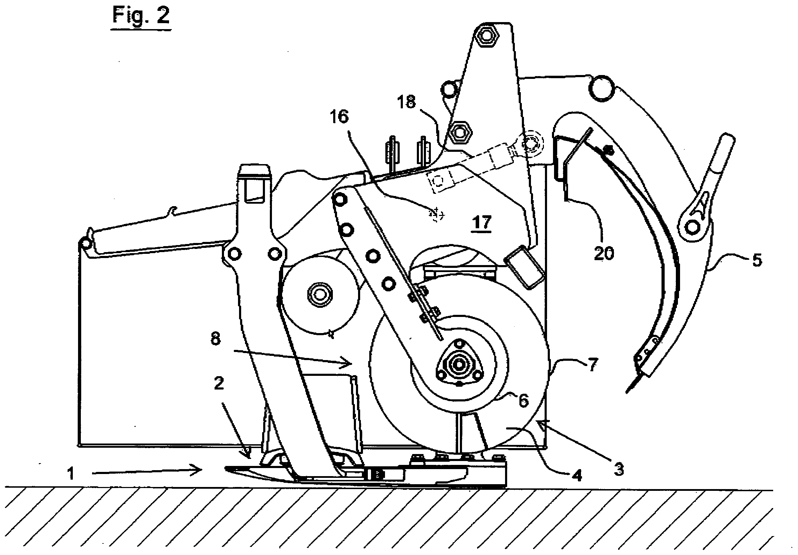

In Fig. 1 ist eine vorteilhafte Ausführungsform einer erfindungsgemäßen Mähmaschine mit einer Mäheinrichtung 1 in einer ersten Arbeits- und Betriebsstellung wiedergegeben, die in einer quer zur Fahrt- und Arbeitsrichtung F gerichteten Reihe beabstandet zueinander eine Anzahl von um eine etwa vertikale Achse rotierend angetriebene Schneidorgane 2 aufweist. An zumindest zwei gegenüberliegenden Stellen sind diese Schneidorgane 2 mit Schneidwerkzeugen bestückt, die im freien Schnitt halmförmiges Erntegut abmähen und durch die Rotationsbewegung In den rückwärtigen Bereich der Mäheinrichtung 1 fördern. In diesem rückwärtigen Bereich schließt sich an die Mäheinrichtung 1 ein Querförderer 3 an, der das abgemähte, halmförmige Erntegut (Halmgut) von der Mäheinrichtung 1 direkt übernimmt und es nach einer quer zur Fahrt- und Arbeitsrichtung F gerichteten Förderung seitlich von der Mäheinrichtung 1 in einem lockeren und exakt geformten Schwad ablegt. Gemäß der Fig. 1 und Fig. 2 umfasst der Querförderer 3 eine Querförderschnecke 4, die von einer Haube 5 umgeben ist. Die Querförderschnecke 4 ihrerseits besteht aus einem Schneckenrohr 6, auf dessen Umfang Schneckenwindungen 7 zur Querförderung des halmförmigen Erntegutes aufgebracht sind. Bei der Querförderung des von der Mäheinrichtung abgemähten Halmgutes wirkt die Querförderschnecke 4 mit der Haube 5 zusammen, wobei die Haube 5 in dem der Mäheinrichtung 1 zugewandten Bereich eine Einlauföffnung 8 ausbildet. Diese Einlauföffnung 8 ist der Bereich, in dem die direkte Übergabe des abgemähten Halmgutes von der Mäheinrichtung 1 zur Querförderschnecke 4 stattfindet.

Nach der Erfindung ist die der Querförderschnecke 4 zugeordnete Haube 5 mit einer Innenmantelfläche 9 versehen, welche in ihrer Lage relativ zur der Haube 5 veränderbar ausgestaltet ist. Diese Innenmantelfläche 9 der Haube 5 bildet mit den Schneckenwindungen 7 der Querförderschnecke 4 einen Förderspalt 10 aus. Die Weite dieses Förderspaltes 10, also der Abstand zwischen der Innenmantelfläche 9 und den Schneckenwindungen 7 ist eine Kenngröße, die den Förderprozess in dem Querförderer 3 entscheidend beeinflusst. Daraus erklärt sich dann auch die Bedeutung der Erfindung für einen optimalen Förderprozess, die Weite des Förderspaltes 10 veränderlich zu gestalten. Wie insbesondere der Fig. 3 zu entnehmen ist, wird die Innenmantelfläche 9 über eine obere Lasche 11 in einen Schlitz 12 in der Rückwand 13 der Haube 5 eingehängt. Eine Sicherung 14 sorgt dabei dafür, dass die Innenmantelfläche 9 auch bei Schwenkbewegungen in der vorgesehenen Position verbleibt. Über die Verstellvorrichtung 15, hier eine mechanische, aus nicht dargestellten kinematischen Elementen gebildete Vorrichtung kann die Weite des Förderspaltes 10 durch eine Schwenkbewegung der Innenmantelfläche 9 verändert werden.

Aus Fig. 2 geht die Mäheinrichtung 1 in einer weiteren Arbeits- und Betriebsstellung hervor. Eine weitere Arbeits- und Betriebsstellung bedeutet hier, dass die Haube 5 durch eine Schwenkbewegung um eine quer zur Fahrt- und Arbeitsrichtung F gerichtete, liegende Achse 16 des Tragrahmens 17 in eine von der Querförderschnecke 4 entfernte Stellung überführt worden ist. Zur Schwenkung der Haube 5 kann beispielsweise ein hydraulisches Stellglied 18 verwendet werden. In dieser Stellung wird das abgemähte Halmgut nicht von der Querförderschnecke übernommen und in eine Querförderung überführt, sondern das abgemähte Halmgut wird direkt hinter der Mäheinrichtung 1 wieder auf dem Erdboden abgelegt. Dieser Vorgang wird als Breitablage bezeichnet.

Als eine vorteilhafte Weiterbildung der erfindungsgemäßen Mähmaschine ist die Ausbildung der Lagerung der Querförderschnecke 4 an der Abgabeseite der Querförderschnecke 4 zu sehen. Um einen möglichst großen Bereich zur Schwadablage an der Abgabeseite der Querförderschnecke 4 zur Verfügung stellen zu können, ist es vorgesehen, eine Halterung 19 zur ortsfesten und drehbaren Lagerung der Querförderschnecke 4 so zu gestalten, dass diese sich von der Lagerstelle an der Querförderschnecke 4 ausgehend in eine Richtung erstreckt, die zumindest in etwa in die 11-Uhr-Stellung zeigt. Dadurch ergibt sich in dem der Mäheinrichtung 1 abgewandten Bereich der Querförderschnecke 4 ein hinreichend großer Bereich für eine störungsfreie Schwadablage seitlich von der Mäheinrichtung 1.

Eine weitere, vorteilhafte Weiterbildung der Mähmaschine stellt auf die Anbringung und Ausgestaltung einer Abstreiferleiste 20 an der die Querförderschnecke 4 umgebenden Haube 5 ab. Hierbei ist es von besonderer Bedeutung, dass die Anbringung der Abstreiferleiste 20 an der Innenseite der Haube 5 in einem Bereich erfolgt, der In Bezug auf eine Blickrichtung auf die Seitenansicht der Querförderschnecke an der Abgabeseite zwischen einer 12-Uhr-Stellung und einer 15-Uhr-Stellung liegt. Damit wird die Schwadablage in einem Bereich vollzogen, der aufgrund seines größeren Abstandes zum Erdboden eine optimale Schwadablage begünstigt. Ferner ist es auch vorteilhaft, wenn das Ende der Abstreiferleiste 20 an der Abgabeseite der Querförderschnecke 4 in Bezug auf die Längsausrichtung der Querförderschnecke 4 über das Ende der Schneckenwindung 7 hinausgeht.

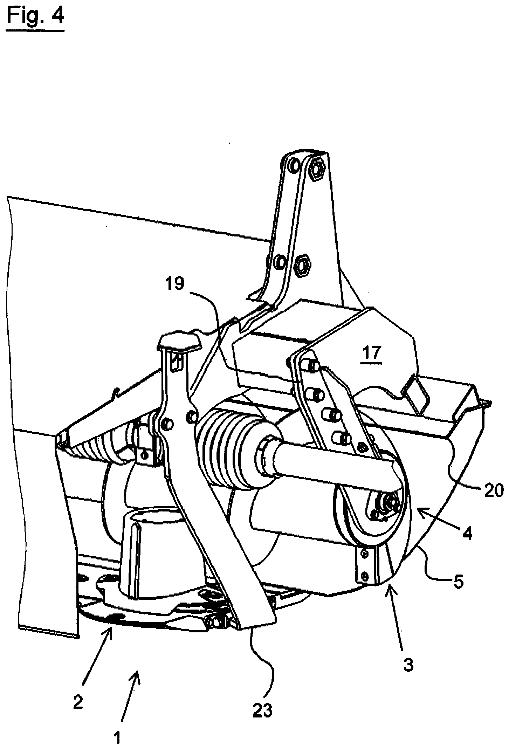

Eine vorteilhafte Auswirkung auf eine störungsfreie Schwadablage ergibt sich, wie insbesondere aus Fig. 4 hervorgeht, auch aus einer Anordnung bzw. einer Gestaltung einer Halterung 23 der Mäheinrichtung 1 am Tragrahmen 17. In diesem Zusammenhang ist es vorgesehen, die Halterung 23 für die Mäheinrichtung 1 am Tragrahmen 17 außerhalb des Mäh- und Förderbereiches des der Abgabeselte der Querförderschnecke 4 zugewandten, inneren Schneidorganes 2 anzuordnen. Weiterhin ist es vorteilhaft, die Halterung 23 für die Mäheinrichtung 1 am Tragrahmen 17 dem Abgabebereich der Querförderschnecke 4 vorzuordnen. Das bedeutet, dass die Halterung 23 für die Mäheinrichtung 1 am Tragrahmen 17 sich in einem Bereich vor der Querförderschnecke 4, jedoch eingerückt gegenüber dem Ende der Querförderschnecke 4 vom Ende der Mäheinrichtung 1 in nahezu vertikaler Ausrichtung zum Tragrahmen 17 erstreckt.

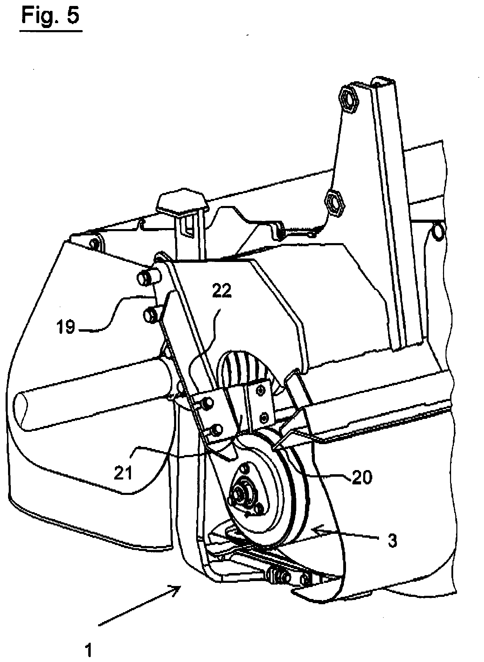

Zur Vermeidung des Aufwickelns von langstängeligem Halmgut am Ende der Querförderschnecke 4 weist die Querförderschnecke 4 am abgabeseitigen Ende der Schneckenwindungen 7 einen Räumer 21 auf, der mit einem ortsfesten weiteren Abstreifer zusammenwirkt. Ein an der Halterung 19 zur Lagerung der Querförderschnecke 4 an der Abgabeseite angebrachter Abstreifer 22 ist so gestaltet, dass bei jeder Umdrehung der Querförderschnecke 4 etwaiges zum Umwickeln neigendes Halmgut in einem Scherenschnitt zerkleinert wird und somit eine Umwickelungsgefahr der Querförderschnecke 4 minimiert ist (Fig. 5).

## Patentansprüche

1. Mähmaschine mit einer Anzahl an einer Mäheinrichtung (1) angebrachten, um eine etwa vertikale Achse rotierend angetriebenen Schneidorganen (2), welche an ihrem Umfang zumindest zwei drehbeweglich angeordnete, infolge der Fliehkraft radial nach außen stehende und eine Schneidwirkung erzeugende Schneidwerkzeuge aufweisen, mit einem der Mäheinrichtung (1) nachgeordneten Querförderer (3), der eine, um eine liegende und zumindest in etwa quer zur Fahrt- und Arbeitsrichtung (F) ausgerichtete Querförderschnecke (4) umfasst, welche unmittelbar hinter der Mäheinrichtung (1) angeordnet ist und das gemähte Erntegut direkt von der Mäheinrichtung (1) übernimmt, mit einer die Querförderschnecke (4) zumindest teilweise umgebenden Haube (5), die eine in Fahrt- und Arbeitsrichtung (F) weisende Einlauföffnung (8) besitzt und eine Innenmantelfläche (9), die mit einer Außenkontur der Querförderschnecke (4) einen Förderspalt (10) begrenzt, wobei die Weite des Förderspaltes (10) zwischen der Innenmantelfläche (9) der Haube (5) und der Außenkontur der Querförderschnecke (4) durch eine Verstellvorrichtung (15) veränderbar ausgestaltet ist,
**dadurch gekennzeichnet, dass** die Innenmantelfläche (9) relativ zur Haube (5) durch eine Verstellvorrichtung (15) verstellbar ist.

2. Mähmaschine nach Anspruch 1, **dadurch gekennzeichnet, dass** die Verstellung der Innenmantelfläche (9) relativ zur Haube (5) manuell ausführbar ist.

3. Mähmaschine nach Anspruch 1, **dadurch gekennzeichnet, dass** die Verstellung der Innenmantelfläche (9) relativ zur Haube (5) durch eine hydraulisch, pneumatisch oder elektrisch ansteuerbare Verstellvorrichtung ausführbar ist.

4. Mähmaschine nach Anspruch 3, **dadurch gekennzeichnet, dass** die Verstellung der Innenmantelfläche (9) relativ zur Haube (5) durch eine hydraulisch, pneumatisch oder elektrisch ansteuerbare Verstellvorrichtung in Abhängigkeit von der Durchsatzmenge des Erntegutes geregelt ausführbar ist.

5. Mähmaschine nach zumindest einem der vorstehenden Ansprüche, **dadurch gekennzeichnet, dass** die Haube (5) mit seiner Innenmantelfläche (9) gegenüber dem Tragrahmen (17) der Mäheinrichtung (1) um eine quer zur Fahrt- und Arbeitsrichtung (F) gerichtete Achse (16) aus einer der Querförderschnecke (4) benachbarten Stellung in eine von der Querförderschnecke (4) entfernte Stellung und zurück verschwenkbar ist.

6. Mähmaschine nach zumindest einem der vorstehenden Ansprüche, **dadurch gekennzeichnet, dass** die Querförderschnecke (4) am Tragrahmen (17) der Mäheinrichtung (1) durch eine Halterung (19) ortsfest und drehbar gelagert ist.

7. Mähmaschine nach Anspruch 6, **dadurch gekennzeichnet, dass** die Querförderschnecke (4) am Tragrahmen (17) der Mäheinrichtung (1) durch eine Halterung (19) ortsfest und drehbar gelagert ist, welche sich an der Abgabeseite der Querförderschnecke (4) von der Lagerstelle der Querförderschnecke (4) ausgehend in eine Richtung erstreckt, die zumindest in etwa in die 11-Uhr-Stellung zeigt.

8. Mähmaschine nach zumindest einem der vorstehenden Ansprüche, **dadurch gekennzeichnet, dass** der Bereich der Erntegutabgabe der Querförderschnecke (4) durch die Anordnung zumindest einer Abstreiferleiste (20) bestimmt ist, welche an der Innenseite der Haube (5) befestigt ist.

9. Mähmaschine nach Anspruch 8, **dadurch gekennzeichnet, dass** die an der Innenseite der Haube (5) befestigte Abstreiferleiste (20) in Bezug auf eine Blickrichtung auf die Seitenansicht der Querförderschnecke (4) in einem Bereich zwischen einer 12-Uhr bis 15-Uhrstellung angeordnet ist.

10. Mähmaschine nach Anspruch 8, **dadurch gekennzeichnet, dass** die an der Innenseite der Haube (5) befestigte Abstreiferleiste (20) in Bezug auf die Längsausrichtung der Querförderschnecke (4) sich über das Ende der Schneckenwindung (7) an der Abgabeseite der Querförderschnecke (4) hinaus erstreckt.

11. Mähmaschine nach zumindest einem der vorstehenden Ansprüche, **dadurch gekennzeichnet, dass** das abgabeseitige Ende der Schneckenwindung (7) der Querförderschnecke (4) einen Räumer (21) aufweist, der mit einem der Halterung (19) der Querförderschnecke (4) am Tragrahmen (17) zugeordneten, weiteren Abstreifer (22) zusammenwirkt.

12. Mähmaschine nach Anspruch 11, **dadurch gekennzeichnet, dass** der dem abgabeseitigen Ende der Schneckenwindung (7) zugeordnete Räumer (21) und der, der Halterung (19) der Querförderschnecke (4) am Tragrahmen (17) zugeordneten, weiteren Abstreifer (22) bei jeder Umdrehung der Querförderschnecke (4) einen Scherenschnitt ausführen.

13. Mähmaschine nach zumindest einem der vorstehenden Ansprüche, **dadurch gekennzeichnet, dass** die Mäheinrichtung (1) mit einer Halterung (23) am Tragrahmen (17) befestigt ist, die in einem Bereich angeordnet ist, der sich außerhalb des Mäh- und Förderbereiches des inneren Schneidorganes (2) der Mäheinrichtung (1) und außerhalb des Abgabebereiches der Querförderschnecke (4) befindet.

14. Mähmaschine nach Anspruch 13, **dadurch gekennzeichnet, dass** die Halterung (23) der Mäheinrichtung (1) am Tragrahmen (17) dem Abgabebereich der Querförderschnecke (4) vorgeordnet ist und sich in etwa vertikaler Ausrichtung von dem inneren Ende der Mäheinrichtung (1) zum Tragrahmen (17) erstreckt.

## Claims

1. Mower comprising a number of cutting elements (2) which are attached to a mowing device (1), are rotatingly driven about an approximately vertical axis and have, on their circumference, at least two rotatably arranged cutting tools which, due to the centrifugal force, face radially outwards and produce a cutting effect, comprising a transverse conveyor (3) which is arranged downstream of the mowing device (1) and comprises a transversal screw conveyor (4) which is oriented around a lying and at least approximately transversely to the travel and working direction (F), is arranged directly behind the mowing device (1) and takes the mown crop directly from the mowing device (1), comprising a hood (5) which at least partly surrounds the transversal screw conveyor (4) and has an inlet opening (8) facing in the travel and working direction (F) and an inner lateral surface (9) which delimits a conveyor gap (10) together with an outer contour of the transversal screw conveyor (4), the width of the conveyor gap (10) between the inner lateral surface (9) of the hood (5) and the outer contour of the transversal screw conveyor (4) being designed to be changeable by means of an adjusting apparatus (15), **characterised in that** the inner lateral surface (9) is adjustable relative to the hood (5) by means of an adjusting apparatus (15).

2. Mower according to claim 1, **characterised in that** adjusting the inner lateral surface (9) relative to the hood (5) can be carried out manually.

3. Mower according to claim 1, **characterised in that** adjusting the inner lateral surface (9) relative to the hood (5) can be carried out by a hydraulically, pneumatically or electrically actuatable adjusting apparatus.

4. Mower according to claim 3, **characterised in that** adjusting the inner lateral surface (9) relative to the hood (5) can be carried out in a controlled manner by a hydraulically, pneumatically or electrically actuatable adjusting apparatus depending on the throughput of the crop.

5. Mower according to at least one of the preceding claims, **characterised in that**, by means of its inner lateral surface (9), the hood (5) is pivotable relative to the support frame (17) of the mowing device (1) about an axis (16) which is directed transversely to the driving and working direction (F) from a position adjacent to the transversal screw conveyor (4) into a position remote from the transversal screw conveyor (4) and back.

6. Mower according to at least one of the preceding claims, **characterised in that** the transversal screw conveyor (4) is fixedly and rotatably mounted on the support frame (17) of the mowing device (1) by means of a holder (19).

7. Mower according to claim 6, **characterised in that** the transversal screw conveyor (4) is fixedly and rotatably mounted on the support frame (17) of the mowing device (1) by means of a holder (19) which extends on the discharge side of the transversal screw conveyor (4) from the bearing point of the transversal screw conveyor (4) in a direction which at least points approximately to the 11 o'clock position.

8. Mower according to at least one of the preceding claims, **characterised in that** the region of the crop discharge of the transversal screw conveyor (4) is determined by the arrangement of at least one scraper bar (20) which is fastened to the inside of the hood (5).

9. Mower according to claim 8, **characterised in that** the scraper bar (20) which is fastened to the inside of the hood (5) is arranged in a region between a 12 o'clock and 3 o'clock position with respect to a viewing direction of the side view of the transversal screw conveyor (4).

10. Mower according to claim 8, **characterised in that** the scraper bar (20) which is fastened to the inside of the hood (5) extends over the end of the screw winding (7) on the discharge side of the transversal screw conveyor (4) with respect to the longitudinal orientation of the transversal screw conveyor (4).

11. Mower according to at least one of the preceding claims, **characterised in that** the discharge-side end of the screw winding (7) of the transversal screw conveyor (4) has a reamer (21) which interacts with an additional scraper (22) associated with the holder (19) of the transversal screw conveyor (4) on the support frame (17).

12. Mower according to claim 11, **characterised in that** the reamer (21), associated with the discharge-side end of the screw winding (7), and the additional scraper (22), associated with the holder (19) of the transversal screw conveyor (4) on the support frame (17), carry out a scissor cut with each rotation of the transversal screw conveyor (4).

13. Mower according to at least one of the preceding claims, **characterised in that** the mowing device (1) is fastened to the support frame (17) by means of a holder (23), which frame is arranged in a region which is outside the mowing and conveyor region of the inner cutting element (2) of the mowing device (1) and outside the discharge region of the transversal screw conveyor (4).

14. Mower according to claim 13, **characterised in that** the holder (23) of the mowing device (1) on the support frame (17) is arranged upstream of the discharge region of the transversal screw conveyor (4) and extends in approximately vertical orientation from the inner end of the mowing device (1) to the support frame (17).

## Revendications

1. Faucheuse comportant un certain nombre d'organes de coupe (2) entraînés en rotation autour d'un axe sensiblement vertical et porté par une installation de fauche (1), ces organes comportant à leur périphérie au moins deux couteaux montés mobiles en rotation et venant en saillie radialement sous l'effet de la force centrifuge pour un effet de fauche,
- un convoyeur transversal (3) en aval de l'installation de fauche (1), qui comprend une vis de transfert transversal (4), couchée et orientée sensiblement transversalement à la direction de circulation et de travail (F), et se trouvant directement derrière l'installation de fauche (1), et reprenant les produits de fauche, directement de l'installation de fauche (1),
- un capot (5) entourant au moins partiellement la vis de transfert transversal (4), ayant une ouverture d'entrée (8) orientée dans la direction de circulation et de travail (F), ainsi qu'une surface enveloppe intérieure (9) délimitant un intervalle de transfert (10) avec le contour extérieur de la vis transversale de transfert (4),
- la largeur de l'intervalle de transfert (10) entre la surface enveloppe intérieure (9) du capot (5) et le contour extérieur de la vis de transfert transversal (4) étant réalisée de façon à pouvoir être modifiée par un dispositif de réglage (15),
faucheuse **caractérisée en ce que**
la surface enveloppe intérieure (9) est réglable par rapport au capot (5) par un dispositif de réglage (15).

2. Faucheuse selon la revendication 1,
**caractérisée par**
un réglage manuel de la surface-enveloppe intérieure (9) par rapport au capot (5).

3. Faucheuse selon la revendication 1,
**caractérisée par**
un dispositif de réglage commandé de manière hydraulique, pneumatique ou électrique pour le réglage de la surface-enveloppe intérieure (9) par rapport au capot (5) est fait.

4. Faucheuse selon la revendication 3,
**caractérisée par**
un dispositif de réglage de la commande hydraulique, pneumatique ou électrique régulé en fonction du débit de produit de récolte, pour le réglage de la surface-enveloppe intérieure (9) par rapport au capot (5).

5. Faucheuse selon l'une des revendications précédentes,
**caractérisée en ce que**
le capot (5) pivote avec sa surface-enveloppe intérieure (9) par rapport au châssis (17) de l'installation de fauche (1), par basculement autour d'un axe (16) orienté transversalement à la direction de circulation et de travail (F) vers une position voisine de la vis de transfert transversal (4) dans une position éloignée de la vis de transfert transversal (4) et en retour.

6. Faucheuse selon au moins l'une des revendications précédentes, **caractérisée en ce que**
la vis de transfert transversal (4) est montée de manière fixe et rotative dans le cadre de support (17) de l'installation de fauche (1) par un moyen de fixation (19).

7. Faucheuse selon la revendication 6,
**caractérisée en ce que**
la vis de transfert transversal (4) est montée de manière fixe et rotative sur le châssis (17) de l'installation de fauche (1) par un support (19), qui s'étend du côté de distribution de la vis de transfert transversal (4) à partir de la position de stockage de la vis de transfert transversal (4) dans une direction orientée au moins sensiblement vers la position de 11 heures.

8. Faucheuse selon au moins l'une des revendications précédentes, **caractérisée en ce que**
la zone d'entrée des produits pour la vis de transfert transversal (4) est déterminée par le montage d'au moins une lame de raclage (20) fixée au côté intérieur du capot (5).

9. Faucheuse selon la revendication 8,
**caractérisée en ce que**
la lame de râclage (20) fixée au côté intérieur du capot (5) est disposée par rapport à la direction de vue sur le côté de la vis de transfert transversale (4) dans une plage comprise entre les positions de 12 heures et 15 heures.

10. Faucheuse selon la revendication 8,
**caractérisée en ce que**
la lame de râclage (20) fixée au côté intérieur du capot (5) s'étend par rapport à la direction longitudinale de la vis de transfert transversal (4) au-delà de l'extrémité du filet de vis (7) du côté de sortie de la vis transversale de transfert (4).

11. Faucheuse selon au moins l'une des revendications précédentes, **caractérisée en ce que**
l'extrémité côté de distribution du filet (7) de la vis de transfert transversal (4) comporte un organe de dégagement (21) coopérant avec un autre racloir (22) associé à une fixation (19) de la vis de transfert transversal (4) sur le châssis de support (17).

12. Faucheuse selon la revendication 11,
**caractérisée en ce que**
l'organe de dégagement (21) associé à l'extrémité côté de sortie du filet de vis (7) et l'autre racloir (22) associé au support (19) de la vis de transfert transversal (4) sur le châssis (17) réalise un cisaillement à chaque rotation de la vis de transfert transversal (4).

13. Faucheuse selon au moins l'une des revendications précédentes, **caractérisée en ce que**
l'installation de fauche (1) est fixée au châssis (17) par un support (23) qui est dans une zone située au-delà de la plage de fauche et de transfert des organes intérieurs de coupe (2) de l'installation de fauche (1) et au-delà de la plage de sortie de la vis de transfert transversal (4).

14. Faucheuse selon la revendication 13,
**caractérisée en ce que**
le support (23) de l'installation de fauche (1) sur le châssis (17) est en amont de la zone de sortie de la vis de transfert transversal (4) et s'étend sensiblement dans la direction verticale à partir de l'extrémité intérieure de l'installation de fauche (1) vers le châssis de support (17).
